# EUROPÄISCHE PATENTSCHRIFT

(11) **EP 2 454 066 B1**
(45) Veröffentlichungstag und Bekanntmachung des Hinweises auf die Patenterteilung: **07.03.2018**
(21) Anmeldenummer: 10747400.9
(22) Anmeldetag: 14.07.2010
(51) Int. Cl.: B29B 13/02, B29C 49/64, H05B 3/00, B29C 35/08, B29L 31/00, B29K 67/00, B29C 49/06, B29C 49/12, B29C 49/78

(54) **VERFAHREN UND VORRICHTUNG ZUR BLASFORMUNG VON BEHÄLTERN**
METHOD AND DEVICE FOR BLOW-MOLDING CONTAINERS
PROCÉDÉ ET DISPOSITIF POUR FORMER DES CONTENANTS PAR SOUFFLAGE

(30) Priorität: 16.07.2009 DE 102009033902
(43) Veröffentlichungstag der Anmeldung: 23.05.2012
(73) Patentinhaber: KHS Corpoplast GmbH, 22145 Hamburg (DE)
(72) Erfinder: ZOCHER, Tara, 22041 Hamburg (DE); BALKAU, Karl-Heinz, 22113 Oststeinbek (DE); RASCH, Jens-Peter, 22926 Ahrensburg (DE); ULUTÜRK, Deniz, 20537 Hamburg (DE); MATTHIESEN, Martin, 22359 Hamburg (DE); LEWIN, Frank, 22889 Tangstedt (DE); LINKE, Michael, 22159 Hamburg (DE)
(74) Vertreter: Hausfeld, Norbert
(86) Internationale Anmeldenummer: PCT/DE2010/000837
(87) Internationale Veröffentlichungsnummer: WO 2011/006483

(56) Entgegenhaltungen:
- WO-A1-2008/109305
- WO-A2-2010/010492
- DE-A1- 19 724 621
- DE-U1- 20 020 149
- US-B1- 6 361 301

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, und bei dem der Vorformling mindestens entlang eines Teiles seines Transportweges im Bereich der Heizstrecke von mindestens einer Heizeinrichtung, die mit mindestens einem röhrenartigen Heizstrahler versehen ist, mit einem Temperaturprofil versehen wird, das sich in einer Längsrichtung des Vorformlings erstreckt.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, und bei der entlang mindestens eines Teiles des Transportweges des Vorformlings eine Einrichtung zur Erzeugung eines Temperaturprofils im Bereich des Vorformlings angeordnet ist, wobei sich das Temperaturprofil in einer Längsrichtung des Vorformlings erstreckt und wobei zur Generierung einer Heizstrahlung mindestens ein im Bereich einer Heizeinrichtung angeordneter röhrenartiger Heizstrahler verwendet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Ein wesentliches Problem bei der Verwendung von konventionellen Infrarot-Strahlern zur Beheizung der Vorformlinge besteht darin, daß der überwiegende Strahlungsanteil bereits in der unmittelbaren Nähe der Oberfläche des Vorformlings in Wärme umgesetzt wird und daß eine Temperierung der inneren Wandungsbereiche des Vorformlings nur durch Wärmeausbreitung innerhalb des thermoplastischen Materials erfolgt. Da das thermoplastische Material ausgeprägte thermisch isolierende Eigenschaften aufweist, ergibt sich für eine ausreichende Wärmeausbreitung ein Zeitbedarf für die Beheizung der Vorformlinge von etwa 20 Sekunden. Zur Vermeidung einer Überhitzung der Oberflächenbereiche des Vorformlings erfolgt gleichzeitig zur Beheizung auch ein Anblasen mit Kühlluft. Hieraus resultiert ein relativ hoher Energieaufwand für die Durchführung der Beheizung.

Zur Unterstützung einer möglichst gleichmäßigen aktiven Beheizung der Vorformlinge durch die Wanddicke des Vorformlings hindurch ist es ebenfalls bekannt, alternativ oder ergänzend zu einer Beheizung mit Infrarotstrahlern auch eine Beheizung mit HF-Strahlung bzw. Mikrowellenstrahlung durchgeführt. Diese Strahlungen machen jedoch Abschirmungen erforderlich, um einen Strahlungsaustritt zu verhindern bzw. abzuschwächen. Darüber hinaus erweist sich eine Umsetzung dieser Strahlung im Vorformlingsmaterial in Wärme als zeitaufwendig, so daß keine nennenswerte Verkürzung der erforderlichen Heizzeiten erreicht werden konnte.

Zur Verkürzung der erforderlichen Heizzeit ist es ebenfalls bereits bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren. Bei einem Betrieb derartiger Heizstrecken zeigt es sich jedoch, daß die Wärmeverteilung innerhalb der Vorformlinge von vorgegebenen Temperierungsprofilen abweicht.

Ein besonderes Problem tritt dann auf, wenn die Vorformlinge nicht im Bereich ihrer gesamten Ausdehnung mit einer möglichst gleichen Temperatur versehen werden sollen, sondern wenn die vorstehend bereits erwähnten Temperaturprofile zu generieren sind. Das Problem bei der Generierung derartiger Temperaturprofile besteht darin, daß die Strahlerröhren die Heizstrahlung zumindest in einer Umfangsrichtung der Röhren relativ gleichmäßig abstrahlen. Durch Verwendung von Reflektoren wird dafür gesorgt, daß in eine den Vorformlingen abgewandte Richtung abgestrahlte Heizenergie zurückgeworfen und in Richtung auf die Vorformlinge geleitet wird.

Zur Generierung von Temperaturprofilen ist es beispielsweise bekannt, Blenden zu verwenden, die bestimmte Bereiche des Vorformlings gegenüber der Heizstrahlung abschatten. Ebenfalls gehören bereits linsenartige Elemente zur Fokussierung der Strahlung oder gewölbte Reflektoren zum Stand der Technik, die eine in Richtung der Vorformlinge ausgerichtete Strahlung unterstützen.

Die US 6 361 301 B1 offenbart ein Verfahren gemäß dem Oberbegriff des Anspruchs 1 und eine Vorrichtung zur Blasformung von Behältern. Aufgabe der vorliegenden Erfindung ist es, ein Verfahren der einleitend genannten Art derart zu verbessern, daß innerhalb der Vorformlinge eine vorgegebene Temperaturverteilung erreicht wird.

Diese Aufgabe wird erfindungsgemäß durch ein Verfahren gemäß Anspruch 1 und eine Vorrichtung gemäß Anspruch 10 gelöst.

Durch die Ausbildung der Heizeinrichtung derart, daß die Strahlungsemission in unterschiedlichen räumlichen Richtungen mit unterschiedlicher und vorgebbarer Intensität erfolgt, ist es insbesondere möglich, diejenigen Anteile der Heizenergie, die auf unterschiedlichen Höhenniveaus der Vorformlinge auftreffen, derart zu wählen, daß das jeweils gewünschte Temperaturprofil erreicht wird. Die höher zu temperierenden Bereiche werden hierbei mit einer höheren Heizleistung und die geringer zu temperierenden Bereiche mit einer geringeren Heizleistung bestrahlt. Insbesondere ist es auch möglich, die Verteilung der Strahlungsemission derart vorzugeben, daß bestimmte Bereiche der Vorformlinge überhaupt nicht von auftreffender Heizstrahlung beaufschlagt werden. Erfindungsgemäß ist vorgesehen, daß zur Beeinflussung der Ausbreitung der Heizstrahlung ein Fokussierreflektor verwendet wird.

Insbesondere erweist es sich zur Bündelung der Strahlung als zweckmäßig, daß der Fokussierreflektor mindestens bereichsweise mit einer ellipsenähnlichen Formgebung versehen wird.

Eine lange Einsatzfähigkeit der Heizeinrichtung wird dadurch unterstützt, daß im Bereich des Fokussierreflektors der Heizstrahler mit in Richtung auf die Reflektorfläche umgebogenen Endabschnitten positioniert wird.

Zur Unterstützung einer verlustarmen Beheizung der Vorformlinge ist daran gedacht, daß ein Heizstrahler zur Generierung einer NIR-Strahlung verwendet wird.

Eine wirksame Strahlungsfokussierung kann dadurch erreicht werden, daß der Heizstrahler innerhalb eines vom Fokussierreflektor begrenzten Aufnahmeraumes und mit einem geringen Abstand zur Reflektorfläche positioniert wird.

Eine weitere Ausrichtung der Strahlung wird dadurch unterstützt, daß zur Abschattung mindestens eine Abschirmung verwendet wird.

Insbesondere ist vorgesehen, daß die Abschirmung zur Abdekkung mindestens eines Umfangsbereiches der Strahlerröhre verwendet wird.

Eine kompakte Konstruktion kann dadurch erreicht werden, daß die Abschirmung als Beschichtung auf dem Heizstrahler positioniert wird.

Ein Einsatz auch bei hohen Betriebstemperaturen der Heizstrahler wird dadurch unterstützt, daß als Abschirmung ein keramisches Material verwendet wird. Erfindungsgemäß ist vorgesehen, daß die Heizeinrichtung am Ende einer Heizstrecke positioniert wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Heizmoduls im Bereich der Heizstrecke,
- Fig. 6: einen Querschnitt durch das Heizmodul gemäß Fig. 5,
- Fig. 7: eine perspektivische Darstellung eines Heizkastens zur Unterstützung einer Temperaturprofilierung der Vorformlinge,
- Fig. 8: eine Draufsicht auf den Heizkasten gemäß Fig. 7,
- Fig. 9: einen Querschnitt gemäß Schnittlinie IX-IX in Fig. 8,
- Fig. 10: eine vergrößerte und stärker detaillierte Abbildung des Querschnittes gemäß Fig. 9 im Bereich des Reflektors mit zugeordneter Strahlerröhre,
- Fig. 11: einen Horizontalschnitt durch die Anordnung gemäß Fig. 9 auf Höhe des Reflektors mit Strahlerröhre,
- Fig. 12: eine perspektivische Darstellung einer Strahlerröhre,
- Fig. 13: eine Draufsicht auf die Strahlerröhre gemäß Fig. 12,
- Fig. 14: eine Ansicht der Strahlerröhre gemäß Blickrichtung XIV in Fig. 13,
- Fig. 15: einen Querschnitt durch die Strahlerröhre gemäß Schnittlinie XV-XV in Fig. 14 und
- Fig. 16: eine gegenüber der Ausführungsform in Fig. 15 abgewandelte Ausführungsform mit vergrößerter Beschichtungsfläche der Strahlerröhre.

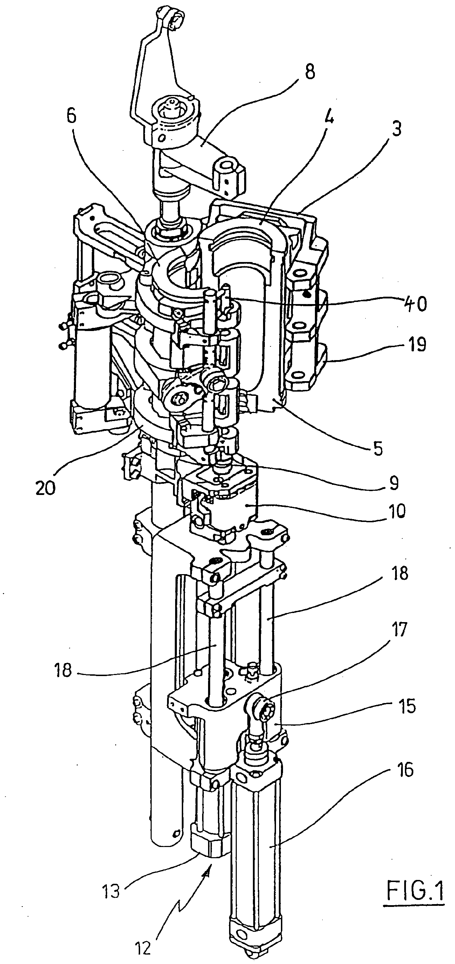

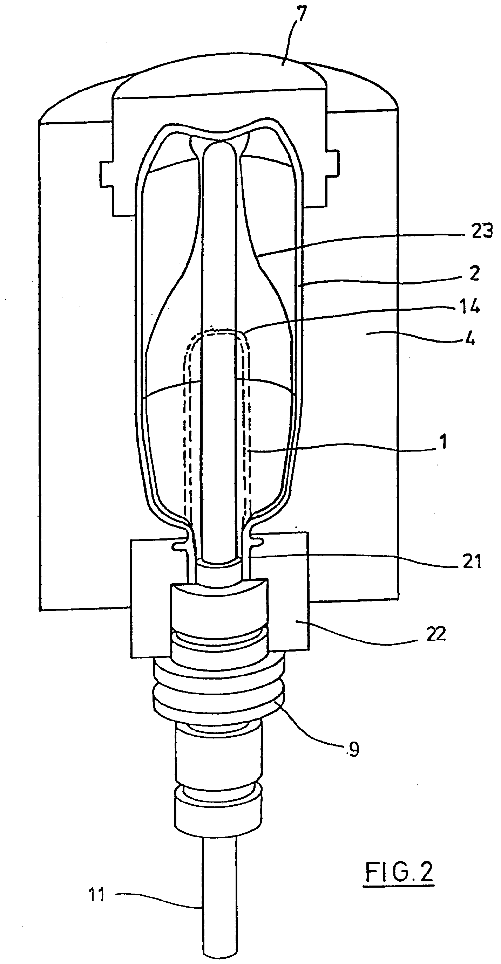

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedruckt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

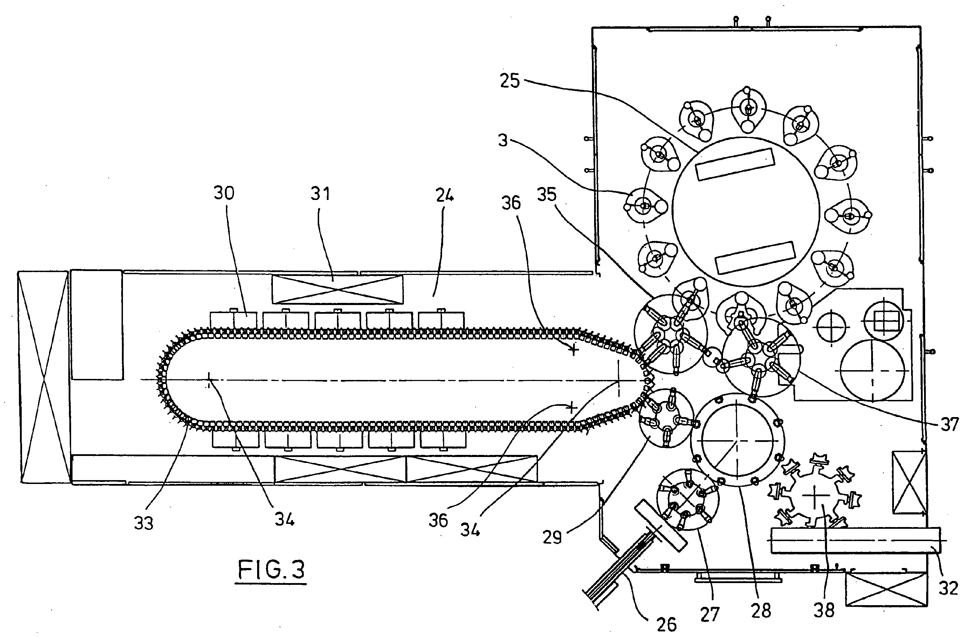

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

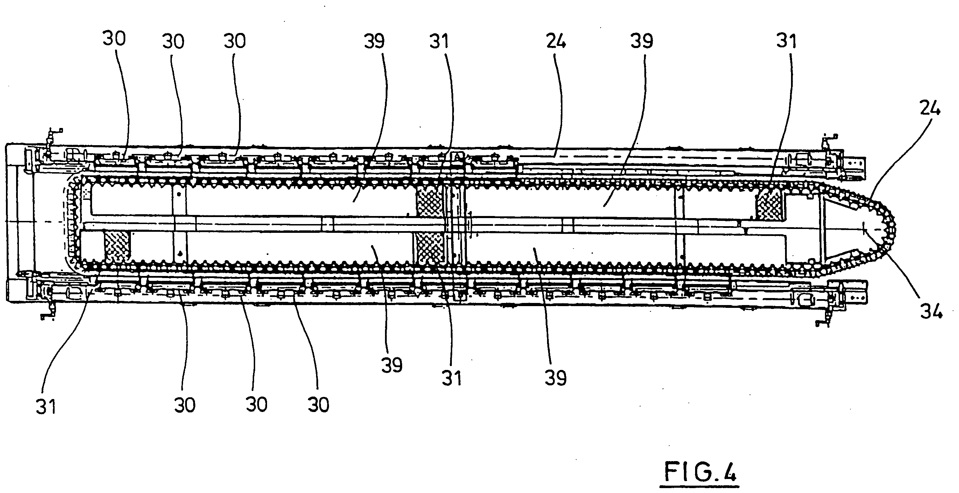

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

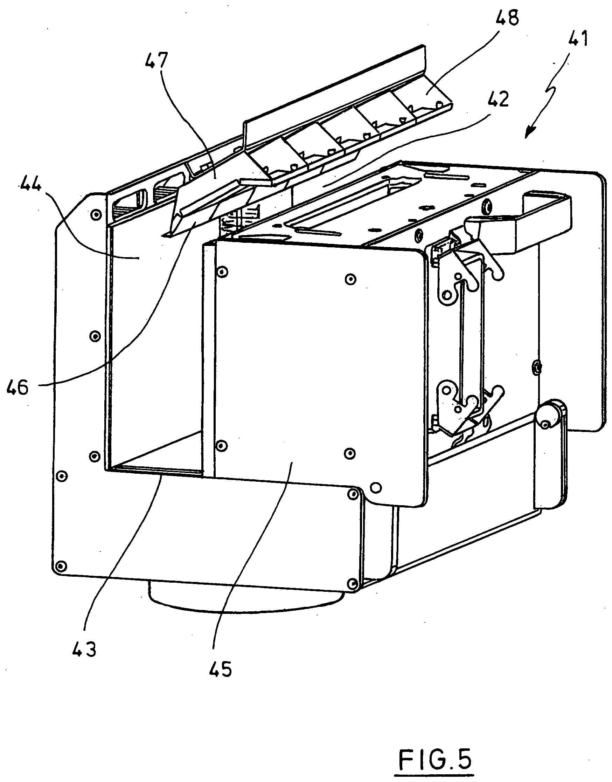

Fig. 5 zeigt eine perspektivische Darstellung eines Heizmoduls (41), das zur Anordnung im Bereich der Heizstrecke (24) vorgesehen ist. Das Heizmodul (41) ist mit einem Heizkanal (42) versehen, durch den die Vorformlinge (1) hindurchbewegt werden. Der Heizkanal (42) ist im wesentlichen entsprechend einem U-Profil ausgebildet und weist einen geschlossenen Boden (43) auf. Seitlich wird der Heizkanal (42) von einem Seitenreflektor (44) sowie von einem Heizkasten (45) begrenzt. Im Bereich des Heizkastens (45) sind die in Fig. 5 nicht erkennbaren Heizstrahler (30) positioniert.

Dem Boden (43) gegenüberliegend wird der Heizkanal (42) von einem Reflektor (46) begrenzt. Der Reflektor (46) ist beim dargestellten Ausführungsbeispiel als eine dem Heizkanal (42) zugewandte Wandung eines Luftleitelementes (47) ausgebildet, das einen Strömungskanal (48) begrenzt.

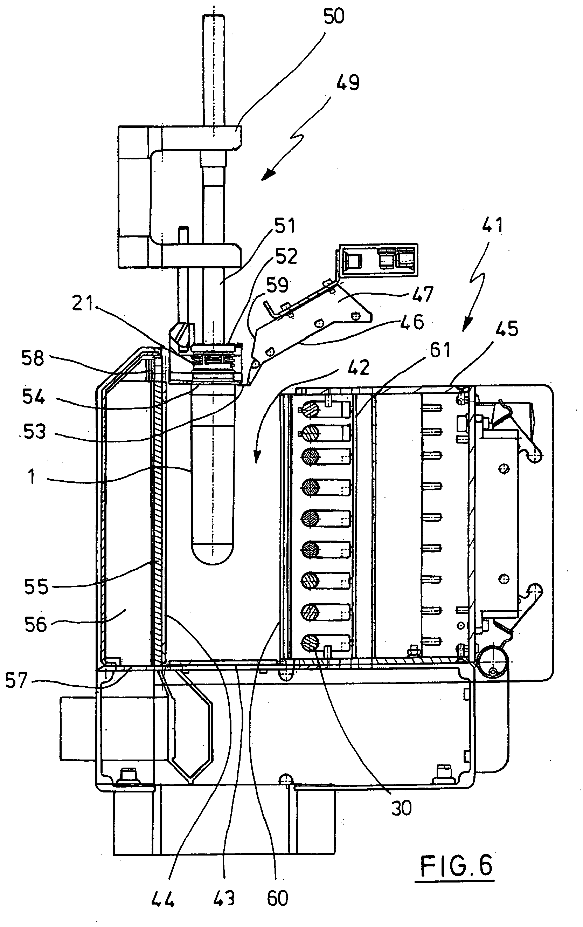

Fig. 6 zeigt einen Querschnitt durch das Heizmodul (41) gemäß Fig. 5 mit zusätzlich eingezeichnetem Vorformling (1) und Halteelement (49). Das Halteelement (49) weist einen Träger (50) auf, der ein stangenartiges Transportelement (51) führt. Das Transportelement (51) ist im Bereich seiner dem Vorformling (1) zugewandten Ausdehnung mit einem Fixierkopf (52) verbunden, der in den Mündungsabschnitt (21) des Vorformlings (1) einführbar und in diesem Bereich verspannbar ist. Der Vorformling (1) kann hierdurch vom Transportelement (51) in einer definierten Positionierung durch den Heizkanal (42) hindurch transportiert werden.

Beim dargestellten Ausführungsbeispiel weist der Reflektor (46) einen benachbart zum Mündungsabschnitt (21) angeordneten Kragen (53) auf, der den Mündungsabschnitt (21) und einen Stützring (54) des Vorformlings (1) gegenüber einer Einwirkung von Heizstrahlung abschirmt, um in diesem Bereich eine Aufheizung zu vermeiden oder zu vermindern.

Aus Fig. 6 ist ebenfalls erkennbar, daß der Seitenreflektor (44) von einem Kühlkörper (55) gehaltert ist, der einen Strömungskanal (56) aufweist. In den Strömungskanal strömt durch eine Einstömöffnung (57) hindurch Kühlluft ein und tritt durch eine Ausströmöffnung (58) wieder aus dem Strömungskanal (56) aus. Insbesondere ist daran gedacht, die Einströmöffnung (57) in einem in lotrechter Richtung unteren Bereich des Strömungskanals (56) und die Ausströmöffnung (58) in einem in lotrechter Richtung oberen seitlichen Bereich des Strömungskanals (56) anzuordnen. Eine Höhenpositionierung der Ausströmöffnung (58) erfolgt vorzugsweise derart, daß diese auf einem Höhenniveau wie der Mündungsabschnitt (21) des Vorformlings (1) angeordnet ist. Die aus dem Kühlkörper (55) austretende Kühlluft umströmt somit den Mündungsabschnitt (21) und führt zu dessen Kühlung.

Insbesondere ist auch daran gedacht, der Ausströmöffnung (58) gegenüberliegend eine Einströmöffnung (59) des Luftleitelementes (57) zu positionieren. Die aus dem Kühlkörper (55) austretende Luft wird somit auch durch das Luftleitelement (47) hindurchgeführt und verursacht eine Kühlung des Reflektors (46).

Im Bereich des Heizkastens (45) sind eine Mehrzahl von Heizstrahlern (30) in lotrechter Richtung übereinander angeordnet. Zur Realisierung einer frequenzselektiven Beheizung ist zwischen den Heizstrahlern (30) und dem Heizkanal (42) eine Filterscheibe (60) angeordnet, die vorzugsweise aus einem geeigneten Quarzglas besteht. Gemäß einer vorteilhaften Ausführungsform werden sowohl die Heizstrahler (30) als auch die Filterscheibe (60) von Kühlluft temperiert.

Im Bereich einer der Filterscheibe (60) abgewandten Richtung hinter den Heizstrahlern (30) ist ein Stahlerreflektor (61) angeordnet, der vorzugsweise eine profilierte Reflektoroberfläche aufweist. Die Reflektoroberfläche ist vorzugsweise derart strukturiert, daß eine Rückstrahlung in die Heizstrahler (30) hinein vermieden wird und die Ausbildung einer geeigneten Wärmeverteilung im Bereich des Heizkanals (42) unterstützt wird.

Der Reflektor (46) ist gemäß dem Ausführungsbeispiel in Fig. 6 derart geformt, daß eine trapezartige Grundkontur bereitgestellt ist, wobei das Trapez in Richtung auf den Heizkasten (45) offen ist. Ausgehend von dieser Trapezkontur erstreckt sich der Kragen (53) im wesentlichen horizontal in Richtung auf den Vorformling (1).

Der Reflektor (46) ist vorzugsweise aus Metall ausgebildet. Insbesondere ist an die Verwendung von poliertem oder verspiegeltem Aluminium gedacht.

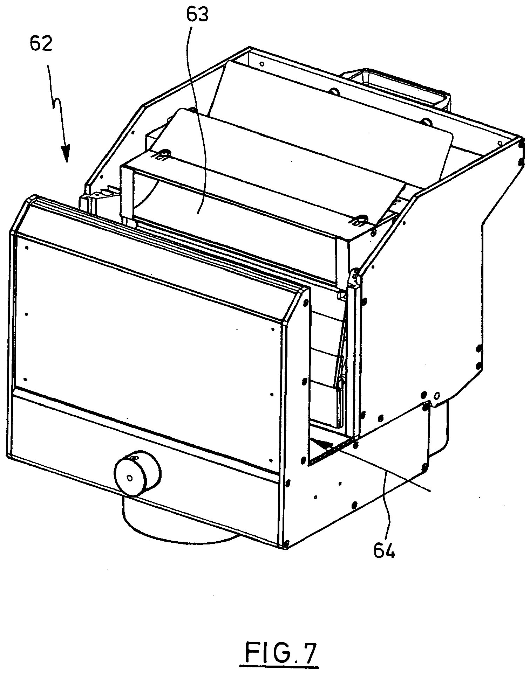

Fig. 7 zeigt eine Heizeinrichtung (62), die vom Grundsatz her ähnlich wie der Heizkasten (45) aufgebaut ist. Die Heizeinrichtung (32) weist einen Fokussierreflektor (63) auf. Der Fokussierreflektor (63) erstreckt sich im wesentlichen in Richtung eines Transportweges (64) der Vorformlinge (1).

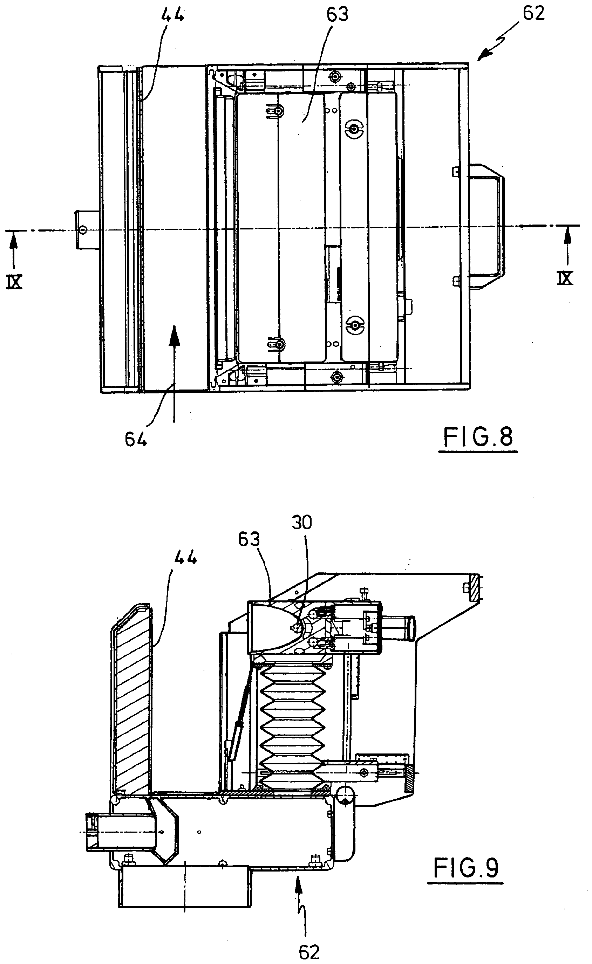

Aus der Draufsicht in Fig. 8 ist zu erkennen, daß gegenüberliegend zum Fokussierreflektor (63) ebenfalls ähnlich zur Konstruktion beim Heizkasten (45) ein Seitenreflektor (44) angeordnet ist.

Aus der Querschnittdarstellung in Fig. 9 ist zu erkennen, daß der Fokussierreflektor (63) im Querschnitt eine Gestaltung ähnlich zu einer Ellipse aufweist. Beim dargestellten Ausführungsbeispiel erstreckt sich der Fokussierreflektor (63) mit einer Form ähnlich zu einer halben Ellipse, wobei diese ellipsenartige Kontur in Richtung auf den Seitenreflektor (44) offen ist, so daß die vom röhrenartigen Heizstrahler (30) emittierte Heizstrahlung in Richtung auf den Seitenreflektor (44) austreten kann. Während der Durchführung des Beheizungsvorganges befindet sich zwischen dem Fokussierreflektor (63) und dem Seitenreflektor (44) der zu beheizende bzw. hinsichtlich seiner Temperatur zu profilierende Vorformling (1).

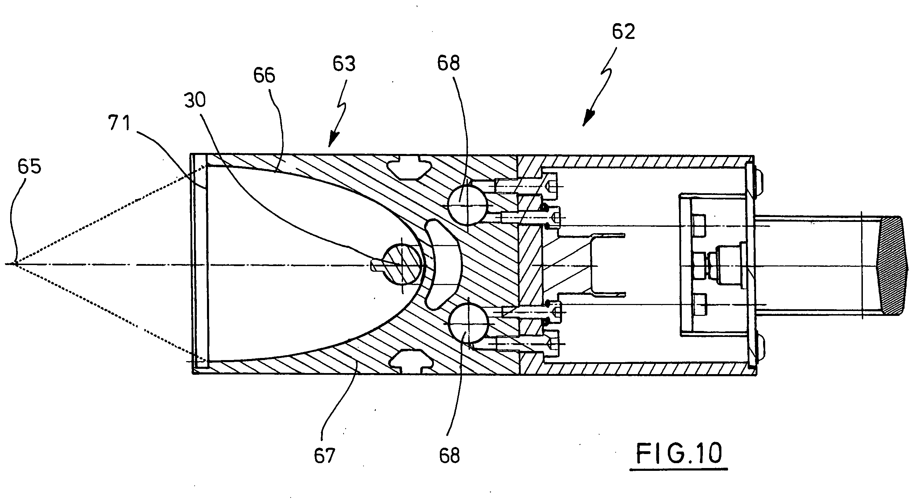

Fig. 10 zeigt eine vergrößerte und stärker detailliertere Querschnittdarstellung des Fokussierreflektors (63). Der Fokussierreflektor (63) weist einen Brennpunkt (65) auf und im Material eines eine Reflektorfläche (66) begrenzenden Reflektorträgers (67) sind Kühlkanäle (68) angeordnet, um den Reflektorträger (67) mit einem Kühlfluid, beispielsweise Wasser, zu kühlen.

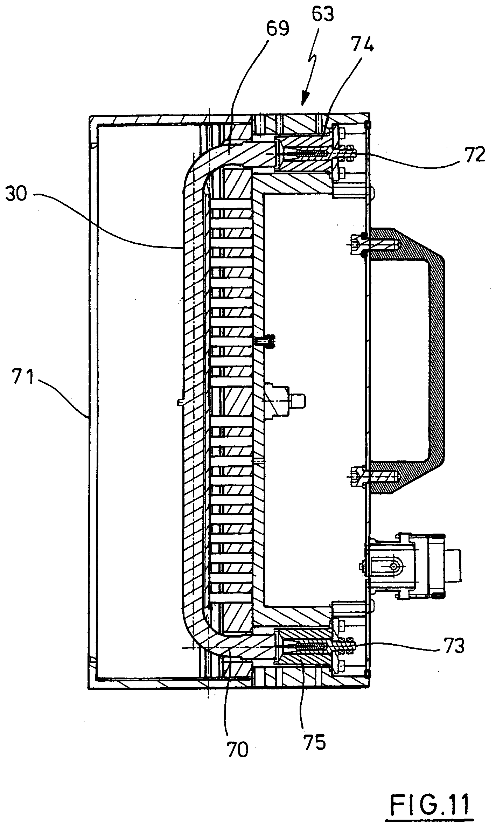

Fig. 11 zeigt in einer detaillierteren. Horizontalschnittdarstellung insbesondere die Anordnung des Heizstrahlers (30) im Bereich des Fokussierreflektors (63). Es ist zu erkennen, daß sich der Heizstrahler (30) röhrenartig erstreckt und im Bereich von Endabschnitten (69, 70) um etwa 90° umgebogen ist. Gesehen von einer Austrittsöffnung (71) des Fokussierreflektors (63) erfolgt diese Umbiegung der Endabschnitte (69, 70) nach hinten, um Anschlußkontakte (72, 73) aus dem Bereich einer großen Heizintensität herauszuführen. Typischerweise werden die Anschlußkontakte (72, 73) von thermischen Isolatoren (74, 75) umgeben.

Durch die Zusammenschau von Fig. 10 und Fig. 11 ist zu erkennen, daß der Heizstrahler (30) gesehen von der Austrittsöffnung (71) relativ weit innerhalb des Fokussierreflektors (63) angeordnet ist und sich hierdurch mit einem vergleichsweise geringen Abstand zum inneren Wendepunkt der Reflektorfläche (66) erstreckt.

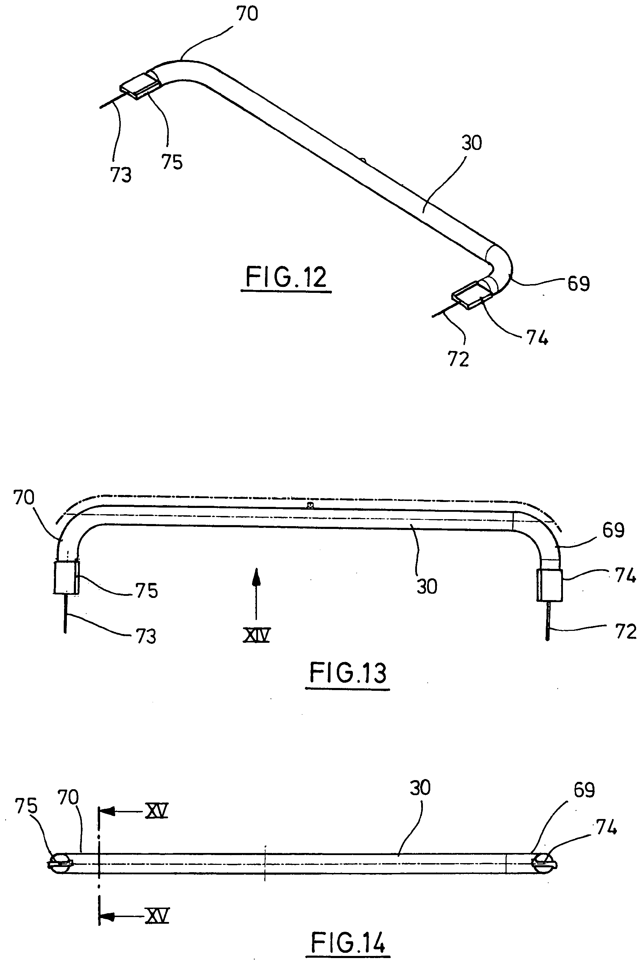

Fig. 12 zeigt einen aus dem Fokussierreflektor (63) herausgenommenen Heizstrahler (30). Es sind insbesondere die Endabschnitte (69, 70) mit den Anschlußkontakten (72, 73) und den Isolatoren (74, 75) zu erkennen.

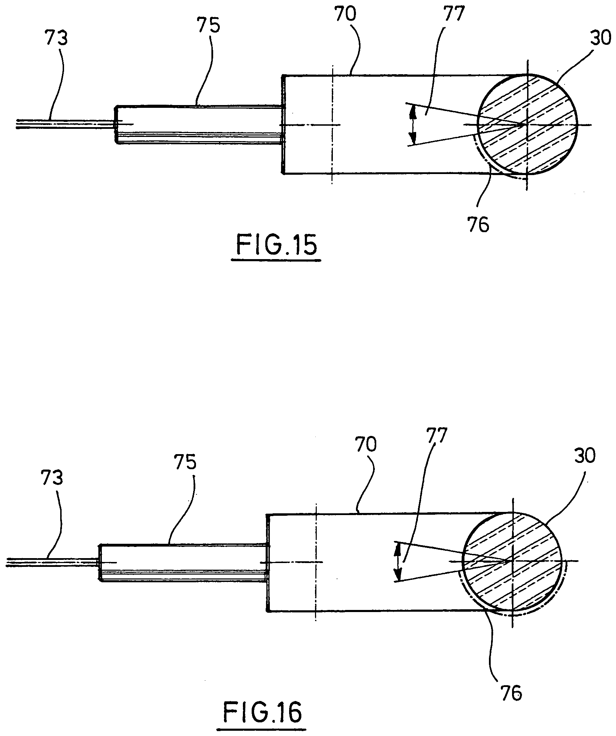

Fig. 13 zeigt eine Draufsicht auf den Heizstrahler (30) gemäß Fig. 12. Strichpunktiert ist ein Bereich für eine Abschirmung (76) veranschaulicht, die in Fig. 15 und Fig. 16 näher erläutert wird.

Fig. 14 veranschaulicht nochmals in einer Seitenansicht die Konstruktion des Heizstrahlers (30).

Fig. 16 veranschaulicht in einer Querschnittdarstellung die Anordnung der Abschirmung (76) im Bereich des Heizstrahlers (30). Insbesondere ist daran gedacht, die Abschirmung (76) als Beschichtung direkt auf das Material des Heizstrahlers (30) aufzubringen. Typischerweise besteht eine Wandung des Heizstrahlers (30) aus Quarzglas. Als Material für die Abschirmung (76) ist bevorzugt an die Verwendung von keramischen Substanzen gedacht.

Gemäß der Ausführungsform in Fig. 15 erstreckt sich die Abschirmung (76) über einen Umfangswinkel des Heizstrahlers (30) von etwa 80°. Beim dargestellten Ausführungsbeispiel beginnt der Bereich der Abschirmung (76) etwa bei einer vertikalen Mittellinie des Heizstrahlers (30) und erstreckt sich im Bereich der der Reflektorfläche (66) zugewandten Oberfläche des Heizstrahlers (30). Durch die Abschirmung (76) wird somit ein Auftreffen von Heizstrahlung auf die weniger gekrümmten Bereiche der Reflektorfläche (66) verhindert. Ein in Fig. 15 eingezeichneter Bezugswinkel (77) beträgt etwa 20°.

Gemäß der weiteren Ausführungsform in Fig. 16 erstreckt sich die Abschirmung (76) über einen Umfangswinkel im Bereich des Heizstrahlers (30) von etwa 170°. Ansonsten entspricht die Anordnung zumindest im wesentlichen der Ausführungsform gemäß Fig. 15.

Als Material für die Abschirmung (76) kann beispielsweise ein Aluminiumoxid verwendet werden. Gedacht ist beispielsweise an *Al₂O₃.* Eine typische Dicke der Abschirmung (56) beträgt 50 Mikrometer, wobei ein bevorzugter Dickenbereich von 40 Mikrometer bis 60 Mikrometer verläuft. Als brauchbar erweisen sich aber auch Schichtdicken in einem Bereich von 10 Mikrometer bis 100 Mikrometer.

Die erfindungsgemäße Heizeinrichtung (62) kann ähnlich wie das Heizmodul (41) in Fig. 6 mit einer Filterscheibe (60), beispielsweise einer Quarzglasscheibe, versehen werden. Bei der Ausführungsform gemäß Fig. 10 würde eine derartige Filterscheibe (60) vorzugsweise im Bereich der Austrittsöffnung (71) angeordnet werden. Vorteilhaft ist die Verwendung einer derartigen Filterscheibe (60) insbesondere zur Beheizung von Vorformlingen (1), die eine Wandstärke von mehr als 4 mm aufweisen. Bei Vorformlingen (1) mit geringeren Wandstärken kann ohne wesentliche Nachteile auch auf die Verwendung einer entsprechenden Filterscheibe (60) verzichtet werden, wobei jedoch in keinem Fall die Verwendung einer Filterscheibe (60) nachteilig ist.

Die erfindungsgemäße Heizeinrichtung (62) wird vorzugsweise im Bereich einer Blasmaschine in einer Transportrichtung der Vorformlinge hinter den Heizelementen zur Erzeugung einer Grundtemperatur der Vorformlinge (1) angeordnet. Die vorliegende Erfindung bezieht sich somit auch auf eine Blasmaschine, die unter Verwendung der entsprechenden Grundtemperierung sowie der erfindungsgemäßen Heizeinrichtung (62) konstruiert ist. Die vorstehend aufgeführten Maßnahmen zur Unterstützung der Temperaturprofilierung, nämlich einmal die Verwendung des Fokussierreflektors (63) und zum anderen die Verwendung der Abschirmung (76), können sowohl einzeln als auch in Kombination zur Anwendung kommen. Bei einer kombinierten Anwendung addieren sich die jeweils erreichbaren Vorteile.

## Patentansprüche

1. Verfahren zur Blasformung von Behältern (2), bei dem ein Vorformling (1) aus einem thermoplastischen Material nach einer thermischen Konditionierung entlang eines Transportweges im Bereich einer Heizstrecke (24) innerhalb einer Blasform (4) durch Blasdruckeinwirkung in den Behälter (2) umgeformt wird, und bei dem der Vorformling (1) mindestens entlang eines Teiles seines Transportweges im Bereich der Heizstrecke (24) von mindestens einer Heizeinrichtung (45, 62), die mit mindestens einem röhrenartigen Heizstrahler (30) versehen ist, mit einem Temperaturprofil versehen wird, das sich in einer Längsrichtung des Vorformlings (1) erstreckt, **dadurch gekennzeichnet, daß** entlang der Heizstrecke (24) Heizeinrichtungen (45) mit mehreren röhrenartigen Heizstrahlern (30) zur Erzeugung einer Grundtemperatur in den Vorformlingen (1) und Heizeinrichtungen (62) mit einem röhrenartigen Heizstrahler (30) zur Erzeugung der Temperaturprofilierung in den Vorformlingen (1) angeordnet sind, wobei die Strahlungsemission des einen Heizstrahlers (30) der temperaturprofilerzeugenden Heizeinrichtung (62) von einer den Heizstrahler (30) positionierenden Heizeinrichtung (62) in unterschiedliche räumliche Richtungen mit unterschiedlicher Intensität abgestrahlt wird, wobei die Heizeinrichtung (62) am Ende der Heizstrecke (24) positioniert wird, nämlich in einer Transportrichtung der Vorformlinge hinter den Heizeinrichtungen (45) zur Erzeugung einer Grundtemperatur in den Vorformlingen (1), wobei bei der temperaturprofilerzeugenden Heizeinrichtung (62) zur Beeinflussung der Ausbreitung der Heizstrahlung ein Fokussierreflektor (63) verwendet wird.

2. Verfahren nach Anspruch 1, **dadurch gekennzeichnet, daß** der Fokussierreflektor (63) mindestens bereichsweise mit einer ellipsenähnlichen Formgebung versehen wird.

3. Verfahren nach einem der Ansprüche 1 oder 2, **dadurch gekennzeichnet, daß** im Bereich des Fokussierreflektors (63) der Heizstrahler (30) mit in Richtung auf die Reflektorfläche (66) umgebogenen Endabschnitten (69, 70) positioniert wird.

4. Verfahren nach einem der Ansprüche 1 bis 3, **dadurch gekennzeichnet, daß** ein Heizstrahler (30) zur Generierung einer NIR-Strahlung verwendet wird.

5. Verfahren nach einem der Ansprüche 1 bis 4, **dadurch gekennzeichnet, daß** der Heizstrahler (30) innerhalb eines vom Fokussierreflektor (63) begrenzten Aufnahmeraumes und mit einem geringen Abstand zur Reflektorfläche (66) positioniert wird.

6. Verfahren nach einem der Ansprüche 1 bis 5, **dadurch gekennzeichnet, daß** bei der temperaturprofilerzeugende Heizeinrichtung (62) zur Abschattung mindestens eine Abschirmung (76) verwendet wird.

7. Verfahren nach Anspruch 6, **dadurch gekennzeichnet, daß** die Abschirmung (7) zur Abdeckung mindestens eines Umfangsbereiches des Heizstrahlers (30) verwendet wird.

8. Verfahren nach einem der Ansprüche 6 oder 7, **dadurch gekennzeichnet, daß** die Abschirmung (76) als Beschichtung auf dem Heizstrahler (30) positioniert wird.

9. Verfahren nach einem der Ansprüche 6 bis 8, **dadurch gekennzeichnet, daß** als Abschirmung (76) ein keramisches Material verwendet wird.

10. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform (4) versehene Blasstation (3) aufweist, und bei der entlang mindestens eines Teiles des Transportweges des Vorformlings (1) eine Einrichtung zur Erzeugung eines Temperaturprofils im Bereich des Vorformlings (1) angeordnet ist, wobei sich das Temperaturprofil in einer Längsrichtung des Vorformlings (1) erstreckt und wobei zur Generierung einer Heizstrahlung mindestens ein im Bereich einer Heizeinrichtung (45, 62) angeordneter röhrenartiger Heizstrahler (30) verwendet ist, wobei entlang der Heizstrecke (24) Heizeinrichtungen (45) mit mehreren röhrenartigen Heizstrahlern (30) zur Erzeugung einer Grundtemperatur in den Vorformlingen (1) und Heizeinrichtungen (62) mit einem röhrenartigen Heizstrahler (30) zur Erzeugung der Temperaturprofilierung in den Vorformlingen (1) angeordnet sind, **dadurch gekennzeichnet, daß** bei der temperaturprofilerzeugenden Heizeinrichtung (62) die den einen Heizstrahler (30) positionierende Heizeinrichtung (62) zur Abstrahlung der Strahlungsemission des Heizstrahlers (30) mit unterschiedlichen Intensitäten in unterschiedliche räumliche Richtungen ausgebildet ist, wobei die temperaturprofilerzeugende Heizeinrichtung (62) am Ende der Heizstrecke der Blasmaschine positioniert ist, um im Anschluß an eine Grundtemperierung der Vorformlinge (1) eine Temperaturprofilierung der Vorformlinge (1) vorzunehmen, und wobei die temperaturprofilerzeugende Heizeinrichtung (62) mindestens einen Fokussierreflektor (63) aufweist.

11. Vorrichtung nach Anspruch 10, **dadurch gekennzeichnet, daß** der Fokussierreflektor (63) eine mindestens bereichsweise ellipsenähnlich ausgebildete Reflektorfläche (66) aufweist.

12. Vorrichtung nach Anspruch 11, **dadurch gekennzeichnet, daß** der Heizstrahler (30) in Richtung auf die Reflektorfläche (66) umgebogene Endabschnitte (69, 70) aufweist.

13. Vorrichtung nach einem der Ansprüche 10 bis 12, **dadurch gekennzeichnet, daß** der Heizstrahler (30) der temperaturprofilerzeugenden Heizeinrichtung (62) zur Generierung von NIR-Strahlung ausgebildet ist.

14. Vorrichtung nach einem der Ansprüche 10 bis 13, **dadurch gekennzeichnet, daß** der Heizstrahler (30) der temperaturprofilerzeugenden Heizeinrichtung (62) mit einem geringen Abstand zur Reflektorfläche (66) des Fokussierreflektors (63) angeordnet ist.

15. Vorrichtung nach einem der Ansprüche 10 bis 14, **dadurch gekennzeichnet, daß** der Heizstrahler (30) der temperaturprofilerzeugenden Heizeinrichtung (62) mindestens abschnittweise mit einer Abschirmung (76) versehen ist.

16. Vorrichtung nach Anspruch 15, **dadurch gekennzeichnet, daß** sich die Abschirmung (76) entlang eines Teilbereiches eines Umfanges des Heizstrahlers (30) erstreckt.

17. Vorrichtung nach einem der Ansprüche 15 oder 16, **dadurch gekennzeichnet, daß** die Abschirmung (76) mindestens bereichsweise als eine Beschichtung des Heizstrahlers (30) ausgebildet ist.

18. Vorrichtung nach einem der Ansprüche 15 bis 17, **dadurch gekennzeichnet, daß** die Abschirmung (76) mindestens bereichsweise aus Keramik ausgebildet ist.

## Claims

1. A method for blow moulding containers (2) wherein, after having been conditioned thermally in a blow mold (4) along a transport path in the vicinity of a heating section (24), a preform (1) made of thermoplastic material is molded by the action of blowing pressure to form the container (2) and wherein, at least along a part of its transport path in the vicinity of the heating section (24), the preform (1) is provided with a temperature profile by at least one heating unit (45, 62) which is provided with at least one tubular radiant heater (30), wherein the temperature profile extends in a longitudinal direction of the preform (1),
**characterised in that**
heating units (45) with a plurality of tubular radiant heaters (30) for the generation of a basic temperature in the preforms (1) and heating units (62) with a tubular radiant heater (30) for the generation of the temperature profile in the preforms (1) are arranged along the heating section (24), wherein the radiation emission of one of the radiant heaters (30) of the heating unit (62) that generates the temperature profile is emitted in different spatial directions at different intensities by a heating unit (62) positioning the radiant heater (30), wherein the heating unit (62) is positioned at the end of the heating section (24), i.e., downstream of the heating units (45) for the generation of a basic temperature in the preforms (1) as seen in the direction of transport of the preforms, wherein, for the purpose of influencing the propagation of the heating radiation, a focusing reflector (63) is used in the heating unit (62) that generates the temperature profile.

2. The method in accordance with Claim 1, **characterised in that** the focusing reflector (63) is provided with an ellipse-like shape at least in certain regions.

3. The method in accordance with any one of Claims 1 or 2, **characterised in that**, in the vicinity of the focusing reflector (63), the radiant heater (30) is positioned with end sections (69, 70) that are bent in the direction towards to the reflecting surface (66).

4. The method in accordance with any one of Claims 1 to 3, **characterised in that** a radiant heater (30) is used for the generation of NIR radiation.

5. The method in accordance with any one of Claims 1 to 4, **characterised in that** the radiant heater (30) is positioned within a receiving chamber that is delimited by the focusing reflector (63) and at a short distance from the reflecting surface (66).

6. The method in accordance with any one of Claims 1 to 5, **characterised in that**, in the heating unit (62) that generates the temperature profile, at least one shield (76) is used for shadowing purposes.

7. The method in accordance with Claim 6, **characterised in that** the shield (7) is used to cover at least one circumferential region of the radiant heater (30).

8. The method in accordance with any one of Claims 6 or 7, **characterised in that** the shield (76) is positioned as a coating on the radiant heater (30).

9. The method in accordance with any one of Claims 6 to 8, **characterised in that** a ceramic material is used for the shield (76).

10. A device for blow moulding containers (2) made of thermoplastic material, the device having at least one heating section (24) arranged along a transport path of a preform (1) and having a blowing station (3) provided with a blow mould (4), and wherein, in said device, a unit for the generation of a temperature profile in the vicinity of the preform (1) is arranged along at least a part of the transport path of the preform (1), wherein the temperature profile extends in a longitudinal direction of the preform (1) and wherein, to generate heating radiation, use is made of at least one tubular radiant heater (30) that is arranged in the vicinity of a heating unit (45, 62), wherein heating units (45) with a plurality of tubular radiant heaters (30) for the generation of a basic temperature in the preforms (1) and heating units (62) with a tubular radiant heater (30) for the generation of the temperature profile in the preforms (1) are arranged along the heating section (24),
**characterised in that**,
in the heating unit (62) that generates the temperature profile, the heating unit (62) that positions the radiant heater (30) is configured to emit the radiation emission of the radiant heater (30) at different intensities into different spatial directions, wherein the heating unit (62) that generates the temperature profile is positioned at the end of the heating section of the blow moulding machine in order to profile the temperature of the preforms (1) subsequent to providing a basic temperature to the preforms (1), and wherein the heating unit (62) that generates the temperature profile has at least one focusing reflector (63).

11. The device in accordance with Claim 10, **characterised in that** the focusing reflector (63) has a reflecting surface (66) that is designed with an ellipse-like shape at least in certain regions.

12. The device in accordance with Claim 11, **characterised in that** the radiant heater (30) has end sections (69, 70) that are bent in the direction towards to the reflecting surface (66).

13. The device in accordance with any one of Claims 10 to 12, **characterised in that** the radiant heater (30) of the heating unit (62) that generates the temperature profile is configured for the generation of NIR radiation.

14. The device in accordance with any one of Claims 10 to 13, **characterised in that** the radiant heater (30) of the heating unit (62) that generates the temperature profile is arranged at a short distance from the reflecting surface (66) of the focusing reflector (63).

15. The device in accordance with any one of Claims 10 to 14, **characterised in that** the radiant heater (30) of the heating unit (62) that generates the temperature profile is provided with a shield (76) at least in certain sections.

16. The device in accordance with Claim 15, **characterised in that** the shield (76) extends along a partial region of a circumference of the radiant heater (30).

17. The device in accordance with any one of Claims 15 or 16, **characterised in that** the shield (76) is designed as a coating on the radiant heater (30) at least in certain regions.

18. The device in accordance with any one of Claims 15 to 17, **characterised in that** the shield (76) is made of ceramics at least in certain regions.

## Revendications

1. Procédé de moulage par soufflage de récipients (2) dans le cadre duquel une préforme (1) en un matériau thermoplastique, après un conditionnement thermique le long d'un parcours dans une section de chauffage (24) est transformée en récipient (2) sous l'action d'une pression de soufflage à l'intérieur d'un moule de soufflage (4), et dans le cadre duquel la préforme (1) est, le long d'au moins une partie de son parcours dans la section de chauffage (24), dotée par au moins un dispositif de chauffage (45, 62) équipé d'au moins un radiateur de chauffage (30) de type tubulaire d'un profil de températures qui s'étend dans le sens longitudinal de la préforme (1), **caractérisé en ce que,** sont agencés le long de la section de chauffage (24) des dispositifs de chauffage (45) avec plusieurs radiateurs de chauffage (30) de type tubulaire pour la production d'une température de base dans les préformes (1) et des dispositifs de chauffage (62) avec un radiateur de chauffage (30) de type tubulaire pour la production du profil de températures dans les préformes (1), le rayonnement du radiateur de chauffage (30) du dispositif de chauffage (62) qui produit le profil de températures étant émis dans différentes directions dans l'espace et avec différentes intensités, par un dispositif de chauffage (62) positionnant le radiateur de chauffage (30) et le dispositif de chauffage (62) étant positionné au bout de la section de chauffage (24), à savoir dans le sens d'une direction de transport des préformes derrière les dispositifs de chauffage (45) qui produisent la température de base dans les préformes (1), le dispositif de chauffage (62) produisant le profil de températures utilisant un réflecteur focalisant (63) pour influer sur la diffusion du rayonnement thermique.

2. Procédé selon la revendication 1, **caractérisé en ce que** le réflecteur focalisant (63) est doté, en partie au moins, d'une forme de type elliptique.

3. Procédé selon l'une des revendications 1 ou 2, **caractérisé en ce que,** au niveau du réflecteur focalisant (63), le radiateur de chauffage (30) est positionné avec ses sections d'extrémités (69, 70) recourbées vers la surface de réflexion (66).

4. Procédé selon l'une des revendications 1 à 3, **caractérisé en ce qu'un** radiateur de chauffage (30) est utilisé pour produire un rayonnement infrarouge proche.

5. Procédé selon l'une des revendications 1 à 4, **caractérisé en ce que** le radiateur de chauffage (30) est positionné à l'intérieur d'un espace délimité par le réflecteur focalisant (63) et à faible distance de la surface de réflexion (66).

6. Procédé selon l'une des revendications 1 à 5, **caractérisé en ce qu'**au moins un écran (76) est utilisé pour faire écran au dispositif de chauffage (62) qui produit le profil de températures.

7. Procédé selon la revendication 6, **caractérisé en ce que** l'écran (7) est utilisé pour masquer au moins une zone périphérique du radiateur de chauffage (30).

8. Procédé selon l'une des revendications 6 ou 7, **caractérisé en ce que** l'écran (76) est positionné sous forme de revêtement sur le radiateur de chauffage (30).

9. Procédé selon l'une des revendications 6 à 8, **caractérisé en ce que** le matériau utilisé pour l'écran (76) est un matériau céramique.

10. Dispositif de moulage par soufflage de récipients (2) en un matériau thermoplastique présentant au moins une section de chauffage (24) agencée le long d'un parcours d'une préforme (1) et une station de soufflage (3) munie d'un moule de soufflage (4) et dans lequel est agencé, le long d'au moins une partie du parcours de la préforme (1), un dispositif pour la production d'un profil de températures au niveau de la préforme (1), le profil de températures s'étendant dans un sens longitudinal de la préforme (1), et au moins un radiateur de chauffage (30) de type tubulaire agencé dans la zone d'un dispositif de chauffage (45, 62) étant utilisé pour la production d'un rayonnement thermique, des dispositifs de chauffage (45) avec plusieurs radiateur de chauffage de type tubulaire (30) pour la production d'une température de base dans les préformes (1) et des dispositifs de chauffage (62) avec un radiateur de chauffage (30) de type tubulaire pour la production d'un profil de températures dans les préformes (1) étant agencés le long section de chauffage de la (24), **caractérisé en ce que,** pour le dispositif de chauffage (62) qui produit le profil de températures, le dispositif de chauffage (62) qui positionne le radiateur de chauffage (30) est conçu de façon à ce que le rayonnement du radiateur de chauffage (30) soit émis avec différentes intensités et selon différentes directions dans l'espace, le dispositif de chauffage (62) qui produit le profil de températures étant positionné au bout de la section de chauffage de la machine de moulage par soufflage pour produire un profil de températures des préformes (1) après que celles-ci aient été chauffées à leur température de base, le dispositif de chauffage (62) qui produit le profil de températures présentant au moins un réflecteur focalisant (63).

11. Dispositif selon la revendication 10, **caractérisé en ce que** le réflecteur focalisant (63) présente une surface de réflexion (66) dont la forme est, en partie au moins, de type elliptique.

12. Dispositif selon la revendication 11, **caractérisé en ce que** le radiateur de chauffage (30) présente des sections d'extrémités (69, 70) recourbées vers la surface de réflexion (66).

13. Dispositif selon l'une des revendications 10 à 12, **caractérisé en ce que** le radiateur de chauffage (30) du dispositif de chauffage (62) qui produit le profil de températures est conçu pour émettre un rayonnement infrarouge proche.

14. Dispositif selon l'une des revendications 10 à 13, **caractérisé en ce que** le radiateur de chauffage (30) du dispositif de chauffage (62) qui produit le profil de températures est positionné à faible distance de la surface de réflexion (66) du réflecteur focalisant (63).

15. Dispositif selon l'une des revendications 10 à 14, **caractérisé en ce que** le radiateur de chauffage (30) du dispositif de chauffage (62) qui produit le profil de températures est, en partie au moins, doté d'un écran (76).

16. Dispositif selon la revendication 15, **caractérisé en ce que** l'écran (76) s'étend le long d'une partie de la périphérie du radiateur de chauffage (30).

17. Dispositif selon l'une des revendications 15 ou 16, **caractérisé en ce que** l'écran (76) est, en partie au moins, réalisé sous forme de revêtement du radiateur de chauffage (30).

18. Dispositif selon l'une des revendications 15 à 17, **caractérisé en ce que** l'écran (76) est, en partie au moins, réalisé en céramique.
